# EUROPÄISCHE PATENTANMELDUNG

(11) **EP 1 422 930 A2**
(43) Veröffentlichungstag der Anmeldung: **26.05.2004**
(21) Anmeldenummer: 03023324.1
(22) Anmeldetag: 15.10.2003
(51) Int. Cl.: H04N 5/217, H04N 5/33

(54) **Verfahren und Vorrichtung zum Erzeugen von homogenisierten Bilddaten bei scannenden Bildgebern**

(30) Priorität: 25.11.2002 DE 10255021
(71) Anmelder: Zeiss Optronik GmbH, 73447 Oberkochen (DE)
(72) Erfinder: Wiedmann, Wolfgang, 73457 Essingen (DE)
(74) Vertreter: Effert, Bressel und Kollegen

(57) **Zusammenfassung**

Die Erfindung betrifft die Erzeugung von Bilddaten, wobei eine Szene mit einem Detektor (1) gescant wird, der eine Vielzahl von Sensorelementen zur Erzeugung von Bildsignalen aufweist. Für die Sensorelemente wird jeweils ein Gesamtwert gebildet (Einheit 12), der eine Gesamtheit von aus dem Sensorelement gewonnenen Bildssignalen repräsentiert, sodass ein Gesamtwerte-Profil zumindest über einen Teil der gescanten Szene erhalten wird. Aus den Gesamtwerten benachbarter Sensorelemente wird ermittelt, ob Unterschiede dieser Gesamtwerte ein vorgegebenes Größenkriterium erfüllen, welches auf Inhomogenitäten in Signalempfindlichkeiten dieser Sensorelemente hindeutet (Einheit 14). Die Bildsignale werden bei Erfüllung des Größenkriteriums derart korrigiert (Einheit 15), dass das Größenkriterium nicht mehr erfüllt ist. Aus den korrigierten Bildsignalen oder aus den Bildsignalen, die das Größenkriterium nicht erfüllen, werden die Bilddaten erzeugt und auf einem Bildschirm (4) dargestellt.

## Beschreibung

Die Erfindung betrifft ein Verfahren und eine Vorrichtung zum Erzeugen von Bilddaten einer Szene, wobei die Szene mit einem Detektor gescant wird. Insbesondere betrifft die Erfindung die Erzeugung eines Bildes von Infrarotstrahlung der Szene (Wärmebildes).

Scannende Bildgeber weisen einen Detektor mit einer Vielzahl von Sensorelementen auf, die bei einer gängigen Ausführungsform zeilenartig nebeneinander angeordnet sind. Insbesondere bei Wärmebildgeräten besitzen die einzelnen Sensorelemente ausgeprägt unterschiedliche Signalempfindlichkeiten, d. h. geben bei derselben auf das Sensorelement einfallenden Strahlung unterschiedlich große Bildsignale ab. Die Bildsignale sind üblicherweise elektrische Spannungen, die beispielsweise auf einem Bildschirm in Bildpunkte bzw. Bildbereiche mit der Spannung entsprechenden Helligkeit und/oder Farbe umgesetzt werden können.

EP 0 600 742 A1 beschreibt ein Sensorsystem mit einem Sensor, der ein Array von Detektorelementen aufweist. Der Sensor ist an einer Sensor-Positioniereinheit montiert, durch die Position des Sensors verändert werden kann. Ein Signalprozessor korrigiert laufend die Intensitäten von Pixeln eines Sensor-Ausgangsarrays bezüglich einer Inhomogenität der Detektorelemente.

Eine gängige Methode, für ein einzelnes Sensorelement die Abhängigkeit der Stärke des Ausgangssignals von der einfallenden Strahlung zu beschreiben, geht von einem linearen Ansatz aus. An einem bestimmten Arbeitspunkt, der z. B. durch die Temperatur eines grauen Strahlers charakterisiert ist, der die auf das Sensorelement einfallende Strahlung emittiert, wird die Signalempfindlichkeit eindeutig durch eine Konstante (Offset) und einen Verstärkungsfaktor (Gain) beschrieben. In einem hinreichend engen Bereich um den Arbeitspunkt ist dies ein ausreichend genauer Ansatz. Die unterschiedliche Signalempfindlichkeit der einzelnen Sensorelemente äußert sich daher in unterschiedlichen Offset- und Gainwerten, die i. d. R. auch noch vom Arbeitspunkt abhängen.

Eine Möglichkeit, die unterschiedlichen Signalempfindlichkeit zu kompensieren, besteht darin, nach jedem Scannen der Szene die emittierte Strahlung einer steuerbaren Strahlungsquelle in den Strahlengang einzukoppeln, sodass auf jedes der Sensorelemente die gleiche Strahlung einfällt. Indem die Temperatur der Strahlungsquelle auf die mittlere Szenentemperatur geregelt wird, findet diese Referenzmessung an einem geeigneten Arbeitspunkt statt. Es können somit jeweils Korrekturwerte der Sensorelemente ermittelt werden. Der Aufwand für die Bereitstellung der Referenzstrahlung und für die Einkopplung der Referenzstrahlung in den Strahlengang ist jedoch groß.

Eine weitere Möglichkeit besteht darin, in größeren zeitlichen Abständen Referenzmessungen bei verschiedenen Arbeitspunkten vorzunehmen und die Offset- und Gainwerte aller Sensorelemente für einen oder mehrere Arbeitspunkte abzuspeichern, sodass sie später zur Korrektur der Bildsignale verwendet werden können. Nachteile dieses Verfahrens liegen darin, dass sich die Signalempfindlichkeiten der Sensorelemente während des Gebrauchs und/oder mit der Zeit verändern, und in dem Aufwand für wiederholte Referenzmessungen.

Aufgabe der vorliegenden Erfindung ist es, bei möglichst geringem Aufwand für Referenzmessungen Inhomogenitäten in den Signalempfindlichkeiten der Sensorelemente mit hoher Genauigkeit berücksichtigen zu können.

Zur Lösung der Aufgabe wird vorgeschlagen, für die Sensorelemente jeweils einen Gesamtwert zu bilden, der eine Gesamtheit von aus dem Sensorelement gewonnenen Bildsignalen repräsentiert, sodass ein Gesamtwerte-Profil zumindest über einen Teil der gescanten Szene erhalten wird. Aus den Gesamtwerten benachbarter Sensorelemente wird ermittelt, ob Unterschiede dieser Gesamtwerte ein vorgegebenes Größenkriterium erfüllen, welches auf Inhomogenitäten in Signalempfindlichkeiten dieser Sensorelemente hindeutet.

Die Erfindung betrifft insbesondere Wärmebildgeräte mit einem Detektor, dessen Sensorelemente als ein zeilenartiges Array angeordnet sind. Sie ist jedoch nicht auf solche Geräte beschränkt. Die Erfindung ist besonders gut für scannende Bildgeber geeignet, die derart betrieben werden, dass das Verhältnis der Anzahl der Sensorelemente zu der daraus in einem einzigen Scanvorgang gewonnenen Anzahl von Bildpunkten groß ist. Dies ist in der Regel bei Detektoren bzw. Bildgebern mit nur einer Zeile oder wenigen Zeilen von Sensorelementen der Fall.

Der die Gesamtheit der Bildsignale des jeweiligen Sensorelementes repräsentierende Gesamtwert ist beispielsweise ein Summenwert, der Wert eines Integrales über den von den Sensorelementen erfassten Bereich der Szene (oder über einen Teilbereich davon), ein Mittelwert oder ein aus diesen Werten abgeleiteter Wert. Auch ist es möglich, zwei oder mehrere dieser Werte und/oder der abgeleiteten Werte zu dem Gesamtwert zu kombinieren.

Je nach Art des Scanverfahrens ist der von einem Sensorelement erfasste Bereich der Szene von unterschiedlicher Art, z. B. eine Zeile bzw. Spalte, ein Zeilenpaar oder eine Gruppe voneinander unabhängiger Teilbereiche.

Der Erfindung liegt der Gedanke zugrunde, dass einander benachbarte Sensorelemente i. d. R. ähnliche Ausgangssignale erzeugen sollen. Dies gilt umso mehr, je dichter die von den benachbarten Sensorelementen erfassten Bereiche beieinander liegen, oder je mehr sie einander überlappen, und je größer die erfassten Bereiche sind. Es kann somit laufend während der Bilderzeugung eine Korrektur hinsichtlich der Inhomogenitäten der Sensorelemente vorgenommen werden. Damit sind jedenfalls während der Bilderzeugung keine aufwändigen Referenzmessungen erforderlich. Eine allmähliche Veränderung der Signalempfindlichkeiten wird korrigiert. Im Vergleich zu Verfahren, bei denen wiederholt Referenzmessungen durchgeführt werden, kann dieselbe oder sogar eine höhere Genauigkeit der Korrektur erreicht werden.

Vorzugsweise werden die Gesamtwerte für alle vorhandenen Sensorelemente gebildet und ausgewertet. Dies ist jedoch nicht zwangsläufig erforderlich. Je nachdem, ob sich die von den einzelnen Sensorelementen erfassten Bereiche der Szene überlappen und ob die Dichte oder Anzahl der Sensorelemente im Vergleich zu der angestrebten Bildauflösung ausreichend groß ist, können beispielsweise nur die Gesamtwerte jedes zweiten oder dritten (allgemein formuliert: jedes n-ten) Sensorelementes gebildet oder ausgewertet werden. Auch ist es möglich, die Dichte der Auswertung über die Szene zu variieren, etwa in einem zentralen Bereich der Szene die Gesamtwerte von mehr Sensorelementen zu bilden oder auszuwerten als in Randbereichen.

Weiterhin wird vorgeschlagen, bei Erfüllung des Größenkriteriums die Bildsignale derart zu korrigieren, dass das Größenkriterium bei den korrigierten Bildsignalen nicht mehr erfüllt ist. Die gewünschten Bilddaten werden also entweder aus den Bildsignalen, die das Größenkriterium nicht erfüllen, oder aus den korrigierten Bildsignalen erzeugt. Dabei kann es sich bei den Bildsignalen, die das Größenkriterium nicht erfüllen, um bereits auf andere Weise korrigierte bzw. vorkorrigierte Bildsignale handeln.

Bei einer besonders bevorzugten Ausführungsform wird zur Korrektur der Signalempfindlichkeiten eine erste Korrektur der Bildsignale vorgenommenen und werden dabei vorgegebene, den Sensorelementen zugeordnete Korrekturwerte verwendet. Beispielsweise sind diese Korrekturwerte das Ergebnis einer früher durchgeführten Referenzmessung der oben genannten Art. Danach wird auf die bereits ein Mal korrigierten Bildsignale das Größenkriterium angewendet. Bei Erfüllung des Größenkriteriums wird zumindest ein weiterer, einem Sensorelement zugeordneter Korrekturwert ermittelt und wird unter Verwendung des zumindest einen weiteren Korrekturwertes eine zweite Korrektur durchgeführt, sodass das Größenkriterium nicht mehr erfüllt ist. Somit kann z. B. eine erste, grobe Korrektur vorgenommen werden und kann durch Anwendung des Größenkriteriums bei Bedarf eine Feinkorrektur erfolgen. Diese Ausführungsform ermöglicht eine besonders genaue Korrektur. Weiterhin ist der Aufwand insgesamt gering, da nur noch bei Bedarf nachkorrigiert werden muss.

Der zumindest eine unter Anwendung des Größenkriterium ermittelte Korrekturwert kann unter Zuordnung zu dem entsprechenden Sensorelemente gespeichert werden. Bei folgenden Scanvorgängen kann der zumindest eine Korrekturwert wieder zur Nachkorrektur verwendet werden und/oder nach Anwendung des Größenkriteriums verändert werden. Vorzugsweise wird dabei jedoch ein Anwendungsbereich geprüft und der zumindest eine Korrekturwert nicht verwendet, wenn der Anwendungsbereich verlassen ist. Z. B. gilt der zumindest eine Korrekturwert nur für einen definierten Bereich um eine Arbeitspunkt, d. h. um einen Wert der mittleren Szenentemperatur.

Unter benachbarten Sensorelementen werden nicht nur nächst benachbarte Sensorelemente verstanden. Vielmehr ist es beispielsweise sinnvoll, bei der Prüfung des Größenkriteriums jeweils z. B. die 4, 6 oder 8 nächstliegenden Sensorelemente (allgemein: die i nächstliegenden Sensorelemente, wobei i eine ganze Zahl ist) von einem, mehreren oder allen Sensorelementen zu betrachten.

Das Größenkriterium kann aus einer oder mehreren Auswertungen der Unterschiede bestehen. Z. B. weist es die Prüfung auf, ob der Gesamtwert eines bestimmten Sensorelementes in einer Umgebung des Sensorelementes ein Extremum ist, ob eine Abweichung des Gesamtwerts eines bestimmten Sensorelementes zu dem Gesamtwert eines benachbarten Sensorelementes größer ist als ein vorgegebener Grenzwert oder größer ist als ein aus einem vorgegebenen Wert und dem Gesamtwerte-Profil ermittelter Grenzwert und/oder ob die örtliche Ableitung des Gesamtwerts an der Stelle eines bestimmten Sensorelementes ein vorgegebenes Maß erreicht oder überschreitet.

Wenn das Größenkriterium erfüllt ist, wird optional außerdem geprüft, ob ein Maß für eine Gesamtheit möglicher Korrekturwerte zur Korrektur der Bildsignale mehr als vorgegeben von Null oder von einem Maß für eine Gesamtheit anderer Korrekturwerte abweicht. Das Maß für die Gesamtheit ist beispielsweise ein Summenwert, ein Mittelwert und/oder ein daraus abgeleiteter Wert.

Auf diese Weise kann verhindert werden, dass Teilbereiche des zu erzeugenden Bildes oder sogar das gesamte Bild durch die Korrektur insgesamt in ihrer Intensität verändert werden. Wird eine solche unzulässige Korrektur festgestellt, wird die Korrektur entweder nicht durchgeführt oder es werden die Korrekturwerte entsprechend angepasst, beispielsweise alle Korrekturwerte in dem jeweiligen Teilbereich erhöht oder erniedrigt.

Für eine Vorrichtung zum Erzeugen von Bilddaten einer Szene wird vorgeschlagen, folgendes vorzusehen:
- einen Detektor zum Scannen der Szene, der eine Vielzahl von Sensorelementen zur Erzeugung von Bildsignalen aufweist,
- eine Einheit zur Bildung von Gesamtwerten, die derart ausgestaltet ist, dass sie für die Sensorelemente jeweils einen Gesamtwert bildet, der eine Gesamtheit von aus dem Sensorelement gewonnenen Bildssignalen repräsentiert, sodass ein Gesamtwerte-Profil zumindest über einen Teil der gescanten Szene erhalten wird,
- eine Einheit zur Prüfung eines Größenkriteriums, wobei die Einheit derart ausgestaltet ist, dass sie aus den Gesamtwerten benachbarter Sensorelemente ermittelt, ob Unterschiede dieser Gesamtwerte ein vorgegebenes Größenkriterium erfüllen, welches auf Inhomogenitäten in Signalempfindlichkeiten dieser Sensorelemente hindeutet,
- eine Einheit zur Korrektur der Bildsignale, wobei die Einheit derart ausgestaltet ist, dass sie die Bildsignale bei Erfüllung des Größenkriteriums derart korrigiert, dass das Größenkriterium nicht mehr erfüllt ist, und
- eine Einheit zur Erzeugung der Bilddaten, die derart ausgestaltet ist, dass sie aus den korrigierten Bildsignalen oder aus den Bildsignalen, die das Größenkriterium nicht erfüllen, die Bilddaten erzeugt.

Die Vorrichtung kann weiterhin eine Speichereinrichtung zum Speichern eines ersten Satzes von Korrekturwerten zur Korrektur der Bildsignale aufweisen und außerdem eine Einheit zur Ermittlung zumindest eines zweiten Korrekturwertes zur Veränderung des ersten Satzes von Korrekturwerten aufweisen. Auf diese Weise ist es möglich, bei jedem Scanvorgang eine Korrektur auf die gleiche Weise durchzuführen, nämlich unter Verwendung eines in der Speichereinrichtung gespeicherten Satzes von Korrekturwerten. Dieser Satz von Korrekturwerten wird bei Bedarf korrigiert. Bei ausreichend großer Scanfrequenz wird ohne sichtbaren Qualitätsverlust in Kauf genommen, dass eine Veränderung des Satzes von Korrekturwerten erst bei der Korrektur des nächsten oder sogar eines späteren Scanlaufes wirksam wird. Dies hat den Vorteil, dass keine zusätzliche Verzögerung bei der Erzeugung der Bilddaten auftritt.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche oder funktionsgleiche Elemente. Im Einzelnen zeigt:
- Fig. 1: eine zu scannende Szene und eine Scanvorrichtung,
- Fig. 2: einen Detektor mit einer Vielzahl zeilenartig nebeneinander angeordneter Sensorelemente,
- Fig. 3: eine Bilderzeugungseinrichtung mit einem daran angeschlossenen Bildschirm,
- Fig. 4: fünf, jeweils einem der Sensorelemente gemäß Figur 2 zugeordnete Gesamtwerte und
- Fig. 5: ein Flussdiagramm.

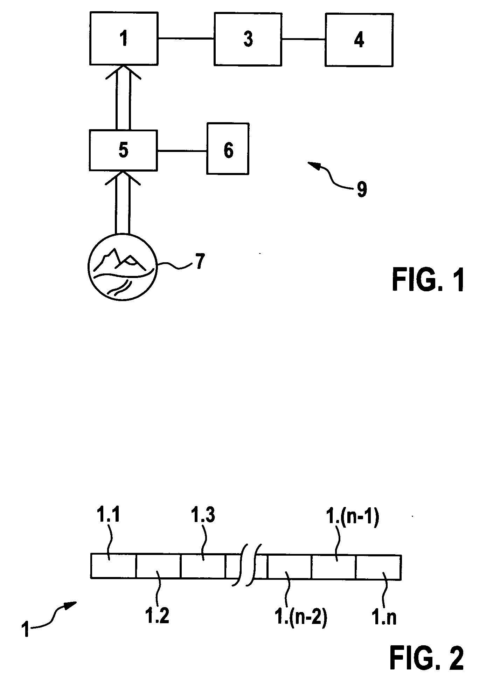

In Fig. 1 ist dargestellt, dass eine Scanvorrichtung 9 elektromagnetische Strahlung von einer zu scannenden Szene 7 empfängt (unterer nach oben gerichteter breiter Pfeil). Bei der Scanvorrichtung 9 handelt es sich insbesondere um ein Wärmebildgerät, d. h. eine für Infrarotstrahlung empfindliche Anordnung, die entsprechend der einfallenden Infrarotstrahlung ein sichtbares Bild erzeugt, insbesondere auf einem Bildschirm 4. Die elektromagnetische Strahlung trifft auf eine optische Einrichtung 5, die beispielsweise einen hinsichtlich seiner Orientierung beweglichen Spiegel aufweist.

Der Scanvorgang wird durch eine Steuerung 6 gesteuert, indem beispielsweise die Orientierung des Spiegels kontinuierlich verändert wird, sodass der zu scannende Bereich der Szene 7 erfasst wird. In jedem Moment während des Scanvorganges trifft die elektromagnetische Strahlung auf Sensorelemente 1.1 bis 1.n eines Detektors 1 (oberer nach oben gerichteter breiter Pfeil). Wie Fig. 2 zeigt, bilden die Sensorelemente 1.1 bis 1.n eine Sensorzeile mit n Elementen, wobei n eine positive ganze Zahl ist, beispielsweise 512. jedes der Sensorelemente 1.1 bis 1.n besitzt eine individuelle Signalempfindlichkeit, d. h. reagiert unterschiedlich auf dieselbe einfallende elektromagnetische Strahlung. Die Sensorelemente 1.1 bis 1.n erzeugen jeweils laufend ein Bildsignal, welches von dem Detektor 1 zu einer Bilderzeugungsvorrichtung 3 übertragen wird. Die Bilderzeugungsvorrichtung 3 wiederum erzeugt Bilddaten, die auf dem Bildschirm 4 in ein sichtbares Bild umgesetzt werden.

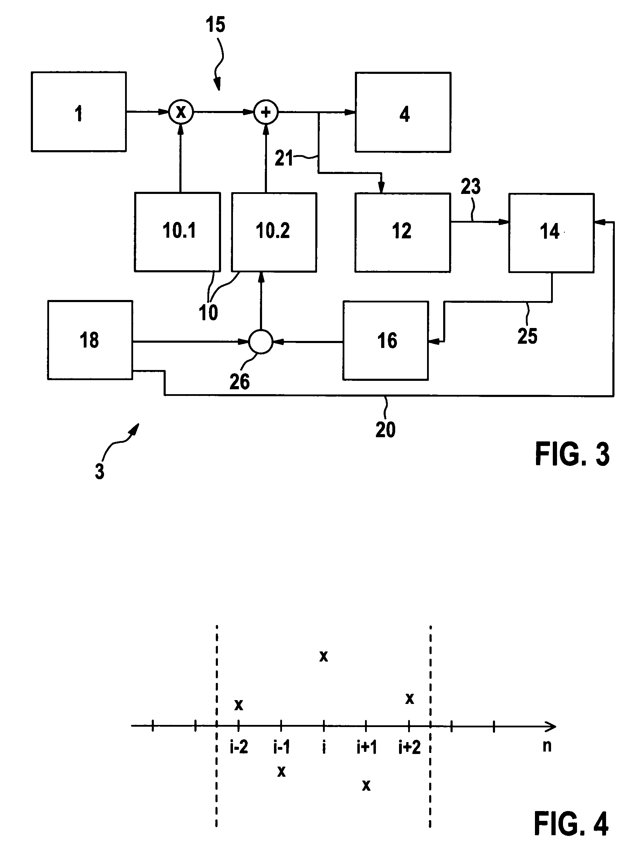

Fig. 3 zeigt wesentliche Teile einer besonders bevorzugten Ausführungsform der Bilderzeugungsvorrichtung 3 mit dem daran angeschlossenen Detektor 1 und dem Bildschirm 4. Die Bilderzeugungseinrichtung 3 weist einen ersten Korrekturwertspeicher 10 auf, der zwei Teilspeicher 10.1 und 10.2 aufweist. In dem Teilspeicher 10.1 ist für alle Sensorelemente 1.1 bis 1.n ein Gain-Korrekturwert gespeichert. In dem Teilspeicher 10.2 ist für alle Sensorelemente 1.1 bis 1.n ein Offset-Korrekturwert gespeichert. Die Teilspeicher 10.1 und 10.2 sind jeweils mit einer Korrektureinrichtung 15 verbunden, in der die von dem Detektor 1 empfangenen Bildsignale zunächst (wie durch ein "x" in einem Kreis dargestellt ist) jeweils mit dem zugehörigen Gain-Korrekturwert des Sensorelementes 1.1 bis 1.n multipliziert werden und anschließend (wie durch ein "+" in einem Kreis dargestellt ist) der zugehörige Offset-Korrekturwert des Sensorelementes 1.1 bis 1.n hinzu addiert werden. Die Ausgangssignale der Korrektureinrichtung stellen die Bilddaten dar und werden einerseits dem Bildschirm 4 und andererseits über eine Signalleitung 21 einer Gesamtwert-Bildungseinheit 12 zugeführt.

Die Gesamtwert-Bildungseinheit 12 ist ausgestaltet, für jedes der Sensorelemente 1.1 bis 1.n einen Gesamtwert aller während eines einzelnen Scanvorganges über die Szene 7 erzeugten Bildsignale zu bilden. Alternativ können die Gesamtwerte auch nur für einen Teil des Scanvorganges gebildet werden. Zum Beispiel sind die Gesamtwerte jeweils gleich dem Integral des Bildsignals des zugeordneten Sensorelementes 1.1 bis 1.n über die Zeit des Scanvorganges. Somit steht in der Gesamtwert-Bildungseinheit 12 als Ausgangssignal ein Profil der Gesamtwerte über die Sensorelemente 1.1 bis 1.n des Detektors 1 zur Verfügung. Die Gesamtwert-Bildungseinheit 12 ist über eine Signalleitung 23 mit einer Homogenität-Prüfungseinheit 14 verbunden. Somit steht das Ausgangssignal dort zur Verfügung. Wie noch näher ausgeführt wird, prüft die Homogenität-Prüfungseinheit 14 anhand des Gesamtwerte-Profils, ob über die bereits erfolgte Korrektur bzw. Aufbereitung der Bildsignale hinaus eine Inhomogenität der Signalempfindlichkeiten der Sensorelemente 1.1 bis 1.n erkennbar ist. Wie ebenfalls noch erläutert wird erhält die Homogenität-Prüfungseinheit 14 außerdem ein Signal von einem zweiten Korrekturwertspeicher 18, in dem für jedes der Sensorelemente 1.1 bis 1.n ein Offset-Korrekturwert gespeichert ist. Das Signal entspricht einem Gesamtwert, insbesondere einem Mittelwert oder Summenwert, der Korrekturwerte in dem zweiten Korrekturwertspeicher 18. Hierzu ist der zweite Korrekturwertspeicher 18 über eine Signalleitung 20 mit der Homogenität-Prüfungseinheit 14 verbunden.

Über eine Signalleitung 25 ist ein Signalausgang der Homogenität-Prüfungseinheit 14 mit einem Signaleingang eines Feinkorrekturwertspeichers 16 verbunden. Bei Erfüllung des Größenkriteriums, welches in der Homogenität-Prüfungseinheit 14 geprüft wird, werden über diese Signalleitung 25 Signale übertragen, die zu einer Änderung zumindest eines der in dem Feinkorrekturwertspeicher 16 gespeicherten Feinkorrekturwerte jedes der Sensorelemente 1.1 bis 1.n führen.

Weiterhin ist eine Kombinationseinrichtung 26 vorgesehen, die jeweils über Signalleitungen eingangsseitig mit dem zweiten Korrekturwertspeicher 18 und dem Feinkorrekturwertspeicher 16 sowie ausgangsseitig mit dem zweiten Teilspeicher 10.2 des ersten Korrekturwertspeichers 10 verbunden ist. Durch die Kombinationseinrichtung 26 werden jeweils die zu einem der Sensorelemente 1.1 bis 1.n gehörenden Feinkorrekturwerte aus dem Feinkorrekturwertspeicher 16 und Offset-Korrekturwerte aus dem zweiten Korrekturwertspeicher 18 kombiniert und an den zweiten Teilspeicher 10.2 ausgegeben. Die ausgegebene Kombination, insbesondere eine Summe der Werte, ersetzt in dem zweiten Teilspeicher 10.2 den entsprechenden, bisher dort gespeicherten Offset-Korrekturwert.

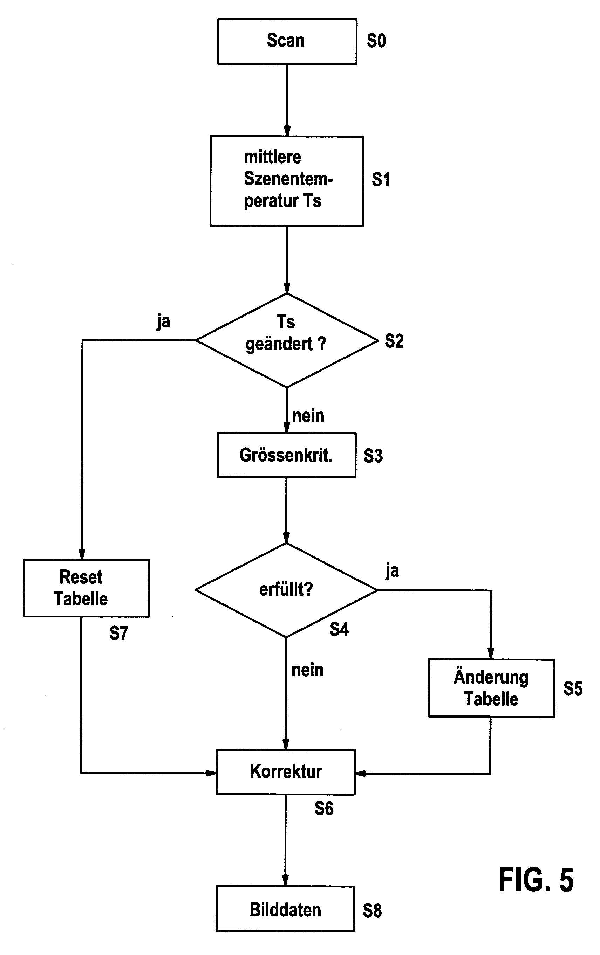

In Fig. 5 ist ein Flussdiagramm der Erzeugung von Bilddaten dargestellt, die teilweise in der anhand von Fig. 3 beschriebenen Bilderzeugungsvorrichtung 3 stattfindet. In Schritt S0 wird eine Szene ein Mal gescant, beispielsweise durch die in Fig. 1 dargestellte Scanvorrichtung 9. Nach diesem einzelnen Scanlauf wird zunächst in Schritt S1 die mittlere Szenentemperatur Ts bestimmt, beispielsweise durch eine nicht in Fig. 3 dargestellte Einheit der Bilderzeugungsvorrichtung 3 oder durch die Gesamtwert-Bildungseinheit 12. Die entsprechende Einheit ist über eine nicht in Fig. 3 dargestellte Steuerleitung mit dem Feinkorrekturwertspeicher 16 und optional mit dem zweiten Korrekturwertspeicher 18 verbunden, um einen definierten Anfangszustand der gespeicherten Korrekturwerte herbeiführen zu können.

In Schritt S2 wird festgestellt, ob sich die mittlere Szenentemperatur Ts gegenüber einem unmittelbar vorangegangenen Scanlauf geändert hat. Ist dies der Fall, wird der Prozess mit Schritt S7 fortgesetzt. Falls es sich um den ersten Scanlauf nach einem Start oder einem Zurücksetzen der Scanvorrichtung handelt, wird ebenfalls mit Schritt S7 fortgesetzt. Andernfalls wird der Prozess mit Schritt S3 fortgesetzt.

In Schritt S7 werden die Offset-Korrekturwerte in dem Feinkorrekturwertspeicher 16 auf Null gesetzt und die Offset-Korrekturwerte aus dem zweiten Korrekturwertspeicher 18 über die Kombinationseinrichtung 26 in den zweiten Teilspeicher 10.2 des ersten Korrekturwertspeichers 10 geladen. Dieses Zurücksetzen der Werte in dem Feinkorrekturwertspeicher 16 berücksichtigt, dass mit einer Änderung der Szenentemperatur Ts sich auch der Arbeitspunkt ändert und, zumindest bei einem linearen Ansatz für die Korrektur der Bildsignale, die Feinkorrekturwerte nicht mehr gültig sind.

Bei einer bevorzugten, alternativen Ausführungsform werden jedoch die aus dem Betrieb der Scanvorrichtung ermittelten Feinkorrekturwerte für jeden Arbeitspunkt bzw. für jeden Arbeitsbereich gespeichert und werden bei Änderung des Arbeitspunktes die gespeicherten Feinkorrekturwerte in den Feinkorrekturwertspeicher 16 geladen.

Bei der Feststellung in Schritt S2 kann eine Bandbreite vorgegeben sein. Wenn der aktuelle Wert der Szenentemperatur Ts innerhalb der Bandbreite um den vorigen Wert Szenentemperatur Ts liegt, wird mit Schritt S3 fortgefahren.

Auf Schritt S7 folgt Schritt S6, in dem die Korrektur der Bildsignale durchgeführt wird. Anschließend werden in Schritt S8 aus den korrigierten Bildsignalen die Bilddaten erzeugt. Nach Schritt S8 kann wieder mit Schritt S0 begonnen werden.

In Schritt S3 wird das Größenkriterium angewendet und in Schritt S4 wird geprüft, ob das Größenkriterium erfüllt ist. Auf entsprechende Beispiele wird noch näher eingegangen. Ist das Größenkriterium erfüllt, werden die Korrekturwerte so geändert, dass das Größenkriterium nicht mehr erfüllt ist (Schritt S5). Ist das Größenkriterium nicht erfüllt, folgt Schritt S6 unmittelbar auf Schritt S4.

Anders als in Fig. 5 dargestellt kann die Korrektur der Bildsignale auch mehrstufig durchgeführt werden. In einer ersten Stufe können die Bildsignale mit den aktuellen, beispielsweise in dem ersten Korrekturwertspeicher 10 gespeicherten Korrekturwerten korrigiert werden. Abhängig von der Erfüllung des Größenkriteriums können dann in einer zweiten oder, wenn das Größenkriterium immer noch erfüllt ist, in zumindest einer weiteren Stufe die Bildsignale mit den Feinkorrekturwerten oder unter Berücksichtigung der Feinkorrekturwerte nachkorrigiert werden.

Ferner ist es möglich, dass anders als in Fig. 5 dargestellt bei Erfüllung des Größenkriteriums zwar die Korrekturwerte oder Feinkorrekturwerte geändert werden, jedoch die geänderten Werte erst bei der Korrektur des nächst folgenden oder eines späteren Scanlaufes verwendet werden. In diesem Fall kann Schritt S6 vor Schritt S3 ausgeführt werden.

Bei einer bevorzugten Ausführungsform ist in dem zweiten Korrekturwertspeicher 18 eine Vielzahl von Korrekturwert-Sätzen, jeweils für einen Arbeitspunkt oder Arbeitsbereich gespeichert. In Schritt S7 wird der jeweilige, der Szenentemperatur Ts entsprechende Korrekturwert-Satz ausgewählt und geladen.

Anhand von Fig. 4 wird nun ein Beispiel für die Prüfung erläutert, ob das Gesamtwerte-Profil auf Inhomogenitäten in den Signalempfindlichkeiten der Sensorelemente 1.1 bis 1.n hindeutet. In der Figur sind die Gesamtwerte von fünf nebeneinander liegenden Sensorelementen mit Kreuzen dargestellt. Die Zahl i ist die Ordnungszahl des mittleren der fünf Sensorelemente. Diese Darstellung entspricht einer bevorzugten Ausführungsform der Prüfung, bei der für jedes der Sensorelemente 1.1 bis 1.n jeweils beidseitig die gleiche Anzahl der folgenden Sensorelemente bei einer Einzel-Prüfung des Größenkriteriums betrachtet werden. In dem in Fig. 4 dargestellten Fall sind es beidseitig des Sensorelementes i jeweils zwei weitere Sensorelemente i-2, i-1 und i+1, i+2.

Der Gesamtwert des Sensorelementes i ist in der betrachteten Umgebung ein Maximum. Weiterhin ist der Unterschied zu den Gesamtwerten der Sensorelemente i-1 und i+1 besonders groß. Dies deutet darauf hin, dass die Bildsignale des Sensorelementes i korrigiert bzw. nachkorrigiert werden sollten. Allgemeiner formuliert weist die Prüfung beispielsweise die folgenden Schritte auf:
- Es wird festgestellt, ob der Gesamtwert des betrachteten Sensorelementes in seiner Umgebung ein Extremum ist.
- In der Umgebung werden jeweils die Unterschiede der Gesamtwerte der nächst benachbarten Sensorelemente ermittelt.
- Es wird der maximale Unterschied ermittelt.
- Es wird der arithmetische Mittelwert der Unterschiede ermittelt.

Aus den Ergebnissen dieser Schritte kann ermittelt werden, ob eine Korrektur durchzuführen ist. Dabei können auch weitere Kriterien, Kenngrößen, Grenzwerte oder Konstanten berücksichtigt werden. Z. B. wird anhand der folgenden Bedingungen festgestellt, ob eine Korrektur des Offset-Korrekturwertes für das Sensorelement i durchzuführen ist:
- Eine Korrektur findet nur dann statt, wenn der Gesamtwert in der Umgebung ein Extremum ist.
- Eine Korrektur findet nur dann statt, wenn die Unterschiede der Gesamtwerte der Sensorelemente i-1 und i sowie der Sensorelemente i und i+1 größer als eine vorgegebene erste Konstante multipliziert mit dem arithmetischen Mittelwert der Unterschiede sind.
- Eine Korrektur findet nur dann statt, wenn die Unterschiede der Gesamtwerte der Sensorelemente i-1 und i sowie der Sensorelemente i und i+1 größer als eine vorgegebene zweite Konstante multipliziert mit dem zweit größten Unterschied der Gesamtwerte in der Umgebung sind.

Wenn alle diese Bedingungen erfüllt sind, wird bevorzugtermassen außerdem geprüft, ob eine entsprechende Anpassung des Offset-Korrekturwertes in der Umgebung den Mittelwert der Offset-Korrekturwerte um einen vorgegebenen Grenzwert oder um mehr als einen vorgegebenen Grenzwerte verändert. Nur wenn dies nicht der Fall ist, wird der geänderte Offset-Korrekturwert übernommen und für die Korrektur der Bildsignale verwendet. Die Homogenität-Prüfungseinheit 14 ist in dem anhand von Fig. 3 beschriebenen Ausführungsbeispiel aus diesem Grund über die Signalleitung 20 mit dem zweiten Korrekturwertspeicher 18 verbunden. Die Einheit 14 hat somit Zugriff auf die nicht veränderbaren Korrekturwerte in dem Speicher 18 und kann daher zuverlässig systematische Verfälschungen in Teilbereichen der gescanten Szene ausschließen.

## Patentansprüche

1. Verfahren zum Erzeugen von homogenisierten Bilddaten einer Szene (7), wobei
- die Szene (7) mit einem Detektor (1) gescant wird, der eine Vielzahl von Sensorelementen (1.1 bis 1.n) zur Erzeugung von Bildsignalen aufweist,
- für die Sensorelemente (1.1 bis 1.n) jeweils ein Gesamtwert gebildet wird, der eine Gesamtheit von aus dem Sensorelement (1.1 bis 1.n) gewonnenen Bildssignalen repräsentiert, sodass ein Gesamtwerte-Profil zumindest über einen Teil der gescanten Szene (7) erhalten wird,
- aus den Gesamtwerten benachbarter Sensorelemente (1.1 bis 1.n) ermittelt wird, ob Unterschiede dieser Gesamtwerte ein vorgegebenes Größenkriterium erfüllen, welches auf Inhomogenitäten in Signalempfindlichkeiten dieser Sensorelemente (1.1 bis 1.n) hindeutet,
- die Bildsignale bei Erfüllung des Größenkriteriums derart korrigiert werden, dass das Größenkriterium nicht mehr erfüllt ist, und
- aus den korrigierten Bildsignalen oder aus den Bildsignalen, die das Größenkriterium nicht erfüllen, die Bilddaten erzeugt werden.

2. Verfahren nach Anspruch 1, wobei zur Korrektur der Signalempfindlichkeiten eine erste Korrektur der Bildsignale vorgenommen wird und dabei vorgegebene, den Sensorelementen (1.1 bis 1.n) zugeordnete Korrekturwerte verwendet werden, wobei das Größenkriterium nach der ersten Korrektur angewendet wird, wobei bei Erfüllung des Größenkriteriums zumindest ein weiterer einem Sensorelement (1.1 bis 1.n) zugeordneter Korrekturwert ermittelt wird und wobei unter Verwendung des zumindest einen weiteren Korrekturwertes eine zweite Korrektur durchgeführt wird, sodass das Größenkriterium nicht mehr erfüllt ist.

3. Verfahren nach Anspruch 1 und 2, wobei die Ermittlung, ob das Größenkriterium erfüllt ist, die Prüfung aufweist, ob der Gesamtwert eines bestimmten Sensorelementes in einer Umgebung des Sensorelementes (1.1 bis 1.n) ein Extremum ist.

4. Verfahren nach einem der Ansprüche 1 bis 3, wobei die Ermittlungen, ob das Größenkriterium erfüllt ist, die Prüfung aufweist, ob eine Abweichung des Gesamtwertes eines bestimmten Sensorelementes (1.1 bis 1.n) zu dem Gesamtwert eines benachbarten Sensorelementes (1.1 bis 1.n) größer ist als ein vorgegebener Grenzwert oder größer ist als ein aus einem vorgegebenen Wert und dem Gesamtwerte-Profil ermittelter Grenzwert.

5. Verfahren nach einem der Ansprüche 1 bis 4, wobei, wenn das Größenkriterium erfüllt ist, geprüft wird, ob ein Maß für eine Gesamtheit möglicher Korrekturwerte zur Korrektur der Bildsignale mehr als vorgegeben von Null oder von einem Maß für eine Gesamtheit anderer Korrekturwerte abweicht.

6. Vorrichtung zum Erzeugen von homogenisierten Bilddaten einer Szene (7), mit:
- einem Detektor (1) zum Scannen der Szene (7), der eine Vielzahl von Sensorelementen (1.1 bis 1.n) zur Erzeugung von Bildsignalen aufweist,
- einer Einheit (12) zur Bildung von Gesamtwerten, die derart ausgestaltet ist, dass sie für die Sensorelemente (1.1 bis 1.n) jeweils einen Gesamtwert bildet, der eine Gesamtheit von aus dem Sensorelement (1.1 bis 1.n) gewonnenen Bildssignalen repräsentiert, sodass ein Gesamtwerte-Profil zumindest über einen Teil der gescanten Szene (7) erhalten wird,
- einer Einheit (14) zur Prüfung eines Größenkriteriums, wobei die Einheit (14) derart ausgestaltet ist, dass sie aus den Gesamtwerten benachbarter Sensorelemente (1.1 bis 1.n) ermittelt, ob Unterschiede dieser Gesamtwerte ein vorgegebenes Größenkriterium erfüllen, welches auf Inhomogenitäten in Signalempfindlichkeiten dieser Sensorelemente (1.1 bis 1.n) hindeutet,
- einer Einheit (10, 15, 16) zur Korrektur der Bildsignale, wobei die Einheit derart ausgestaltet ist, dass sie die Bildsignale bei Erfüllung des Größenkriteriums derart korrigiert, dass das Größenkriterium nicht mehr erfüllt ist, und
- einer Einheit (15) zur Erzeugung der Bilddaten, die derart ausgestaltet ist, dass sie aus den korrigierten Bildsignalen oder aus den Bildsignalen, die das Größenkriterium nicht erfüllen, die Bilddaten erzeugt.

7. Vorrichtung nach Anspruch 6, wobei die Vorrichtung eine Speichereinrichtung (10) zum Speichern eines ersten Satzes von Korrekturwerten zur Korrektur der Bildsignale aufweist und eine Einheit (16) zur Ermittlung zumindest eines zweiten Korrekturwertes zur Veränderung des ersten Satzes von Korrekturwerten aufweist.

8. Vorrichtung nach Anspruch 7, wobei die Vorrichtung eine zweite Speichereinrichtung (18) zum Speichern eines dritten Satzes von Korrekturwerten aufweist und wobei die Vorrichtung derart steuerbar ist, dass der dritte Satz von Korrekturwerten in die erste Speichereinrichtung (10) übertragbar ist.

9. Scanner mit einer Vorrichtung nach einem der Ansprüche 6 bis 8, wobei der Scanner eine Einheit (4) zum Darstellen der von der Vorrichtung erzeugten Bilddaten aufweist.
